# EUROPEAN PATENT APPLICATION

(11) **EP 3 858 649 A1**
(43) Date of publication of application: **04.08.2021**
(21) Application number: 19864696.0
(22) Date of filing: 19.09.2019
(51) Int. Cl.: B60K 7/00, F16D 55/226, F16D 65/02, H02K 7/116

(54) **BRAKING STRUCTURE FOR IN-WHEEL MOTOR DRIVE DEVICE**

(30) Priority: 27.09.2018 JP 2018181481
(71) Applicant: NTN Corporation, Osaka-shi, Osaka 550-0003 (JP)
(72) Inventor: TAKEUCHI, Naoya, Iwata-shi, Shizuoka 438-8510 (JP); TAMURA, Shiro, Iwata-shi, Shizuoka 438-8510 (JP); TAIKOU, Shinya, Iwata-shi, Shizuoka 438-8510 (JP)
(74) Representative: Bockhorni & Brüntjen Partnerschaft Patentanwälte mbB
(86) International application number: PCT/JP2019/036749
(87) International publication number: WO 2020/066834

(57) **Abstract**

A braking structure for an in-wheel motor drive device includes: an in-wheel motor drive device including a wheel hub bearing unit (11) and a motor unit, the wheel hub bearing unit (11) including an outer ring (12) connected to a road wheel (W) and a brake rotor (BR), inner rings (13) disposed coaxially with the outer ring (12), and a plurality of rolling elements (14) arranged in annular clearance between the outer ring and the inner rings, and the motor unit being configured to drive the outer ring; a carrier member (17) coupled to a vehicle body-side member and attached to and fixed to an inner fixing member (15) for the inner rings (13); and a brake caliper bracket (18) that has its inner end (18b) connected to the carrier member (17) and that supports a brake caliper (19) at its outer end (18a).

## Description

### Technical Field

The present invention relates to in-wheel motor drive devices that are disposed inside a wheel and drive the wheel, and more particularly to a support structure for a brake device that brakes the wheel.

### Background Art

For example, a technique described in Japanese Patent No. 5589634 (Patent Literature 1) is known as a structure in which a floating caliper brake unit is attached to an in-wheel motor disposed inside a wheel and configured to drive the wheel. In Patent Literature 1, main parts of the motor are housed inside a cylindrical motor housing. A disc rotor is connected to a protruding end of an output shaft protruding in the axial direction from the motor housing. An end of the motor housing from which the output shaft protrudes is covered by a circular end face. Two bosses stand on the circular end face. The bosses support the floating caliper brake unit. The bosses have a threaded hole. The floating caliper brake unit is fixed to the bosses by inserting bolts through both ends of the floating caliper brake unit and screwing the bolts into the bosses.

### Citation List

### Patent Literatures

Patent Literature 1: Japanese Patent No. 5589643

### Summary of Invention

### Technical Problem

In Patent Literature 1, since the floating caliper brake unit is directly fixed to the motor housing, the braking force of the brake is transmitted to the motor housing. The braking force of the brake must be received by the motor housing, which is disadvantageous for the rigidity of the motor housing. Misalignment of the motor shaft inside the motor housing therefore occurs, causing noise and vibration.

In view of the above, it is an object of the present invention to provide a technique that can eliminate noise and vibration by preventing misalignment of a motor shaft due to the braking force when braking a wheel by a braking mechanism.

### Solution to Problem

In order to achieve the above object, a braking structure for an in-wheel motor drive device according to the present invention includes an in-wheel motor drive device including a wheel hub bearing unit and a motor unit, the wheel hub bearing unit including a rotating ring connected to a wheel and a member to be braked, a stationary ring disposed coaxially with the rotating ring, and a plurality of rolling elements arranged in annular clearance between the rotating ring and the stationary ring, and the motor unit being configured to drive the rotating ring. The braking structure for an in-wheel motor drive device further includes: a carrier member coupled to a vehicle body-side member and attached to and fixed to the stationary ring; and a braking mechanism support provided on the carrier member and supporting a braking mechanism configured to press and brake the member to be braked.

According to the present invention, since the braking force of the braking mechanism is transmitted to the carrier member via the braking mechanism support, the braking force is not transmitted to a casing etc. of the in-wheel motor drive device. Accordingly, the rigidity of the in-wheel motor drive device will not be reduced, and misalignment of the motor shaft can be prevented, so that the cause of noise and vibration can be eliminated. Moreover, the weight of the in-wheel motor drive device can be reduced by reducing the thickness of the casing of the in-wheel motor drive device, simplifying the shape of the casing of the in-wheel motor drive device, etc. The stationary ring may be directly fixed to the carrier member or may be indirectly fixed to the carrier member via another member. The vehicle body-side member refers to a member attached to the vehicle body side as viewed from a member being described. Examples of the vehicle body-side member as viewed from the carrier member include a suspension system and a subframe.

The wheel hub bearing unit of the present invention may be of any type as long as it is a radial bearing including an outer ring, an inner ring, and a plurality of rolling elements. The wheel hub bearing unit of the present invention may be of a type having a rotating inner ring and a stationary outer ring, or vice versa. In one aspect of the present invention, the rotating ring is an outer ring, the stationary ring includes an inner ring and an inner fixing member extending in an axial direction from the inner ring, and the carrier member is attached and fixed to the inner fixing member. According to this aspect, the inner ring of the wheel hub bearing unit, the inner fixing member, and the carrier member can bear the axle load of a vehicle body including the vehicle body-side member.

In one aspect of the invention, the braking mechanism support is a separate member from the carrier member and has its one end attached to the braking mechanism and the other end attached and fixed to the carrier member. According to this aspect, since the carrier member and the braking mechanism support are separate members, the braking mechanism support is replaceable, and a variety of braking mechanisms and members to be braked can be disposed around the wheel. In another aspect of the present invention, the braking mechanism support may be integral with the carrier member.

The axis of the wheel hub bearing unit extends in a lateral direction of a vehicle. The position of the braking mechanism is not particularly limited. However, in a further preferred aspect of the invention, the braking mechanism support is disposed at a position closer to a rear of the vehicle with respect to the axis of the wheel hub bearing unit. According to this aspect, the braking mechanism can be disposed at a position closer to the rear of the vehicle with respect to the axis of the wheel, and the motor unit can be disposed at a position closer to a front of the vehicle with respect to the axis of the wheel. A large space can thus be provided for each of the braking mechanism and the motor unit in a narrow internal space region of the wheel. Moreover, the motor unit and the carrier member, which are heavy components, can be arranged in a balanced manner in a longitudinal direction of the vehicle. The axis of the wheel may cross the carrier member or may not cross the carrier member. The axis of the wheel may cross the motor unit or may not cross the motor unit. In a further aspect, the braking mechanism support is disposed at a position closer to the front of the vehicle with respect to the axis. In a further aspect, the braking mechanism support is disposed upward with respect to the axis.

In one aspect, the braking mechanism support has one end to which the braking mechanism is attached and the other end that is connected to the carrier member, and the one end of the braking mechanism support is disposed in the internal space region of the wheel. According to this aspect, the braking mechanism can be disposed in the internal space region of the wheel. In a preferred aspect, regarding the position in the axial direction, the braking mechanism is preferably disposed so as to overlap a wheel center of the wheel. Alternatively, the braking mechanism is disposed inward or outward of the wheel center in the axial direction. In the specification, the term "outward," "outer side," or "outer" means the outer side in the lateral direction of an electric vehicle, and the term "inward," "inner side," or "inner" means the inner side in the lateral direction of the electric vehicle.

### Advantageous Effects of Invention

As described above, according to the present invention, in the wheel that is driven by the in-wheel motor drive device and that is braked by the braking mechanism, noise and vibration of the in-wheel motor drive device can be eliminated by preventing misalignment inside the in-wheel motor drive device when braking the wheel by the braking mechanism.

### Brief Description of Drawings

[FIG. 1] FIG. 1 is a developed sectional view of an in-wheel motor drive device.
[FIG. 2] FIG. 2 is a schematic cross section illustrating the inside of the in-wheel motor drive device.
[FIG. 3] FIG. 3 is a schematic longitudinal section of a wheel, suspension system, and carrier member of an electric vehicle.
[FIG. 4] FIG. 4 is an enlarged schematic longitudinal section of a braking device.
[FIG. 5] FIG. 5 is a schematic longitudinal section of a modification of a braking mechanism support.

### Description of Embodiments

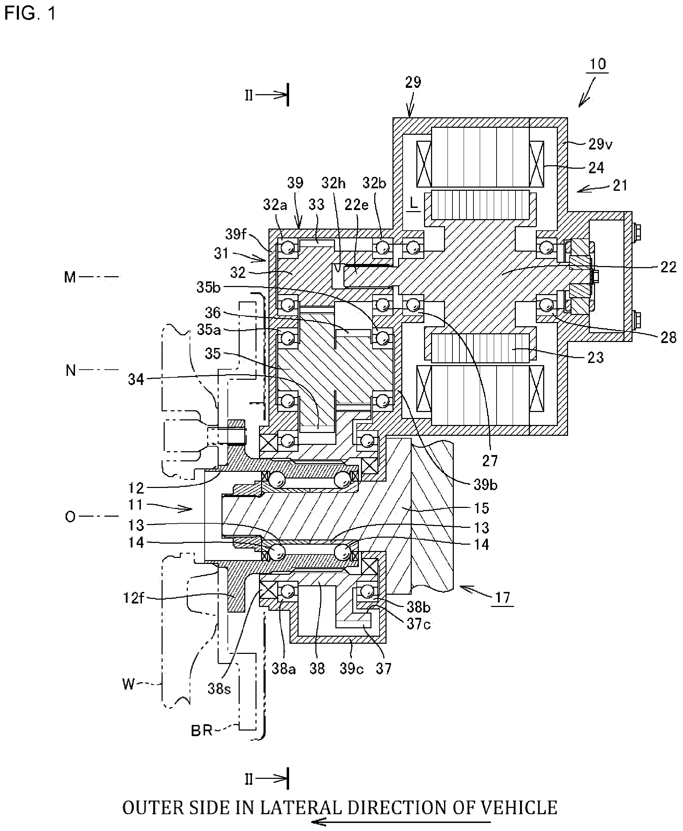

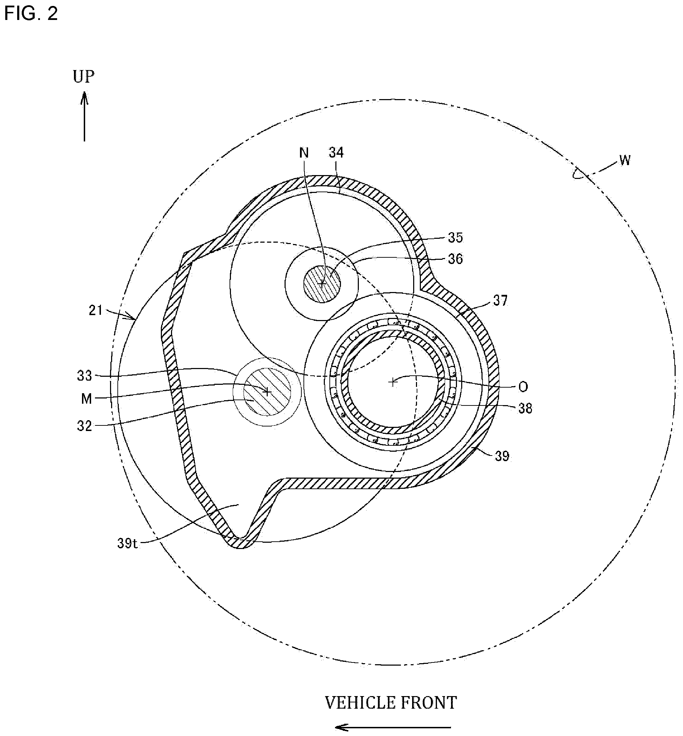

An embodiment of the present invention will be described in detail with reference to the accompanying drawings. FIG. 1 is a developed sectional view of an in-wheel motor drive device. FIG. 2 is a schematic cross section illustrating the inside of the in-wheel motor drive device. As shown in FIG. 1, an in-wheel motor drive device 10 includes: a wheel hub bearing unit 11 provided in the center of a road wheel W; a motor unit 21 that drives the road wheel W; and a reduction gear unit 31 that reduces rotation of the motor unit 21 in speed to transmit the resultant rotation to the wheel hub bearing unit 11. The motor unit 21 and the reduction gear unit 31 are disposed offset from the axis O of the wheel hub bearing unit 11. The axis O extends in the lateral direction of a vehicle and matches the axis of an axle. Regarding the position in the axis O direction, the wheel hub bearing unit 11 is disposed on one side in the axis O direction of the in-wheel motor drive device 10 (outer side in the lateral direction of the vehicle, outboard side), the motor unit 21 is disposed on the other side in the axis O direction of the in-wheel motor drive device 10 (inner side in the lateral direction of the vehicle, inboard side), and the reduction gear unit 31 is disposed on the one side in the axis O direction of the motor unit 21. The axial position of the reduction gear unit 31 overlaps the position in the axis O direction of the wheel hub bearing unit 11.

A wheel is the road wheel W shown in FIG. 2 with a tire (not shown) mounted around its outer periphery. The in-wheel motor drive device 10 is disposed in an internal space region of the road wheel W. The wheel hub bearing unit 11 and the reduction gear unit 31 are accommodated in the internal space region of the road wheel W. The motor unit 21 protrudes from the internal space region of the road wheel W toward the other side in the axial direction (inboard side). In a non-illustrated modification, the motor unit 21 may be accommodated in the internal space region of the road wheel W.

The wheel hub bearing unit 11 is a bearing unit having a rotating outer ring and a stationary inner ring, and includes: an outer ring 12 that is a rotating ring (hub ring) connected to the road wheel W; inner rings 13 that are stationary rings coaxially disposed radially inside the outer ring 12; and a plurality of rolling elements 14 arranged in an annular space between the outer ring 12 and the inner rings 13.

The inner rings 13 are provided as a pair and are combined face-to-face. A shaft-like inner fixing member 15 is inserted through and fixed in all the inner rings 13. The inner fixing member 15 extends along the axis O, and an end on the one side in the axis O direction (outboard side) of the inner fixing member 15 is thinner than an end on the other side in the axis O direction (inboard side) of the inner fixing member 15. In a non-illustrated modification, the inner ring 13 may be a solid shaft and may include the inner fixing member 15. A carrier member 17 is attached and fixed to the inner fixing member 15 connected to the inner rings 13 by connecting means such as a bolt, not shown. Since the carrier member 17 is thus connected to the stationary rings of the wheel hub bearing unit 11, the carrier member 17 is also called a hub carrier. The carrier member 17 will be described in detail later.

The outer ring 12 extends in the axis O direction. An end on the one side in the axis O direction of the outer ring 12 protrudes beyond the inner ring 13 and a front portion 39f of a body casing 39 toward the one side in the axis O direction, and a region on the other side in the axis O direction of the outer ring 12 is disposed inside the body casing 39. The region on the other side in the axis O direction of the outer ring 12 is inserted into a central hole of an output shaft 38 of the reduction gear unit 31 that will be described later and is fitted in the central hole of the output shaft 38 so as not to be rotatable relative to the output shaft 38. The outer ring 12 has a flange 12f on its end on the one side in the axis O direction of the outer ring 12. A brake rotor BR and the road wheel W are attached and fixed to the flange 12f by connecting means such as a bolt (not shown).

The motor unit 21 includes a motor rotating shaft 22, a rotor 23, a stator 24, and a motor casing 29, and these components of the motor unit 21 are arranged in this order from the axis M of the motor unit 21 toward the outer side in the radial direction of the motor unit 21. The motor casing 29 surrounds the outer periphery of the stator 24. The motor unit 21 is an inner rotor/outer stator radial gap motor, but may be other type of electric motor. For example, although not shown in the figures, the motor unit 21 may be an axial gap motor. An end on one side in the axis M direction of the motor casing 29 is connected to a back portion 39b of the body casing 39 of the reduction gear unit 31. An end on the other side in the axis M direction of the motor casing 29 is sealed by a plate-like motor casing cover 29v. The back portion 39b is a casing wall that covers an end on the other side in the axis O direction of the reduction gear unit 31 out of the body casing 39.

The body casing 39, the motor casing 29, and the motor casing cover 29v form a casing that forms an outer shell of the in-wheel motor drive device 10, and are sometimes simply collectively referred to as the casing. The casing is made of aluminum or an aluminum alloy.

Both ends of the motor rotating shaft 22 are rotatably supported by the back portion 39b of the body casing 39 and the motor casing cover 29v of the motor unit 21 via rolling bearings 27, 28, respectively.

The axis M, which is the center of rotation of the motor rotating shaft 22 and the rotor 23, extends parallel to the axis O of the wheel hub bearing unit 11. That is, the motor unit 21 is disposed offset from the axis O of the wheel hub bearing unit 11. For example, as shown in FIG. 2, the axis M of the motor unit 21 is offset from the axis O in the longitudinal direction of the vehicle. Specifically, the axis M of the motor unit 21 is located forward of the axis O in the longitudinal direction of the vehicle.

As shown in FIG. 1, the reduction gear unit 31 includes: an input shaft 32 coaxially connected to the motor rotating shaft 22 of the motor unit 21; an input gear 33 coaxially provided on the outer peripheral surface of the input shaft 32; a plurality of intermediate gears 34, 36; an intermediate shaft 35 connected to the centers of the intermediate gears 34, 36; the output shaft 38 coupled to the outer ring 12 of the wheel hub bearing unit 11; an output gear 37 coaxially provided on the outer peripheral surface of the output shaft 38; and the body casing 39 accommodating these gears and rotating shafts. Since the body casing 39 forms an outer shell of the reduction gear unit 31, the body casing 39 is sometimes referred to as the reduction gear unit casing.

The input gear 33 is an external helical gear. The input shaft 32 has a hollow structure at least in its end on the other side in the axial direction (inboard side). An end 22e on the one side in the axis M direction of the motor rotating shaft 22 is inserted into a hole 32h of the input shaft 32 and is fitted in the hole 32h by spline fitting (including serrations; the same applies to the following description) so as not to be rotatable relative to the input shaft 32. The input shaft 32 is rotatably supported by the front portion 39f and the back portion 39b of the body casing 39 via rolling bearings 32a, 32b on both sides of the input gear 33, respectively.

The axis N, which is the center of rotation of the intermediate shaft 35 of the reduction gear unit 31, extends parallel to the axis O. Both ends of the intermediate shaft 35 are rotatably supported by the front portion 39f and the back portion 39b of the body casing 39 via rolling bearings 35a, 35b. The first intermediate gear 34 is coaxially provided on one side in the axis N direction of the intermediate shaft 35. The second intermediate gear 36 is coaxially provided on the other side in the axis N direction of the intermediate shaft 35.

The first intermediate gear 34 and the second intermediate gear 36 are external helical gears, and the diameter of the first intermediate gear 34 is larger than the diameter of the second intermediate gear 36. The first intermediate gear 34 with a large diameter is disposed on the one side in the axis N direction of the second intermediate gear 36 and meshes with the input gear 33 with a small diameter. The second intermediate gear 36 with a small diameter is disposed on the other side in the axis N direction of the first intermediate gear 34 and meshes with the output gear 37 with a large diameter.

As shown in FIG. 2, the axis N of the intermediate shaft 35 is located above the axis O and the axis M. The axis N of the intermediate shaft 35 is also located forward of the axis O and rearward of the axis M in the longitudinal direction of the vehicle. The reduction gear unit 31 is a three-axis parallel-shaft gear reducer having the axes O, N, and M located away from each other in the longitudinal direction of the vehicle and extending parallel to each other, and reduces the rotational speed in two stages. In a non-illustrated modification, the reduction gear unit 31 may be a multi-stage parallel-shaft gear reducer having a plurality of intermediate shafts.

Referring back to FIG. 1, the output gear 37 is an external helical gear and is coaxially provided on an end on the other side in the axis O direction of the output shaft 38. The output shaft 38 extends along the axis O. An end on the one side in the axis O direction of the output shaft 38 extends through the wall-like front portion 39f, and the outer peripheral surface of this end of the output shaft 38 is rotatably supported by the front portion 39f of the body casing 39 via a rolling bearing 38a. A sealing material 38s is provided in annular clearance between the end on the one side in the axis O direction of the output shaft 38 and the front portion 39f. The sealing material 38s is adjacent to the rolling bearing 38a in the axis O direction and prevents foreign matter from entering the rolling bearing 38a from the outside of the body casing 39.

The outer peripheral surface of the end on the other side in the axis O direction of the output shaft 38 is rotatably supported by the back portion 39b of the body casing 39 via a rolling bearing 38b. The output gear 37 forms a recess 37c that is thinner than the face width of the output gear 37. The outside diameter dimension of the rolling bearing 38b is sufficiently smaller than the addendum circle of the output gear 37, and at least a part of the rolling bearing 38b is placed in the recess 37c.

The output shaft 38 has a tubular shape, and the region on the other side in the axis O direction of the outer ring 12 is inserted into a hole of the output shaft 38 and is fitted in the hole of the output shaft 38 by spline fitting so as not to be rotatable relative to the output shaft 38.

As shown in FIG. 1, the reduction gear unit 31 reduces rotation of the input shaft 32 in speed by meshing between a small-diameter drive gear and a large-diameter driven gear, that is, meshing between the input gear 33 and the first intermediate gear 34 and meshing between the second intermediate gear 36 and the output gear 37, and transmits the resultant rotation to the output shaft 38. The rotating elements from the input shaft 32 to the output shaft 38 of the reduction gear unit 31 form a drive transmission path that transmits the rotation of the motor unit 21 to the outer ring 12 of the wheel hub bearing unit 11.

The body casing 39 includes a tubular portion 39c in addition to the front portion 39f and the back portion 39b described above. The tubular portion 39c covers the internal parts of the reduction gear unit 31 so as to surround the axes O, N, and M extending parallel to each other. The plate-like front portion 39f covers the internal parts of the reduction gear unit 31 from the one side in the axial direction and is connected to an end on the one side in the axial direction of the tubular portion 39c. The plate-like back portion 39b covers the internal components of the reduction gear unit 31 from the other side in the axial direction and is connected to an end on the other side in the axial direction of the tubular portion 39c. The back portion 39b of the body casing 39 also serves as a partition wall connected to the motor casing 29 and separating the internal space of the reduction gear unit 31 and the internal space of the motor unit 21 from each other. The motor casing 29 is supported by the body casing 39 and protrudes toward the other side in the axial direction from the body casing 39.

The body casing 39 defines the internal space of the reduction gear unit 31 and accommodates all of the rotating elements (rotating shafts and gears) of the reduction gear unit 31 in the internal space. As shown in FIG. 2, the lower part of the body casing 39 serves as an oil reservoir portion 39t. The vertical position of the oil reservoir portion 39t overlaps the vertical position of the lower part of the motor unit 21. Lubricating oil that lubricates the motor unit 21 and the reduction gear unit 31 is stored in the oil reservoir portion 39t that occupies the lower part of the internal space of the body casing 39.

The input shaft 32, the intermediate shaft 35, and the output shaft 38 are supported at their both ends by the rolling bearings described above. These rolling bearings 32a, 35a, 38a, 32b, 35b, and 38b are radial bearings.

When electric power is supplied to the motor unit 21 from the outside of the in-wheel motor drive device 10, the rotor 23 of the motor unit 21 rotates, and the rotation is output from the motor rotating shaft 22 to the reduction gear unit 31. The reduction gear unit 31 reduces the speed of the rotation input from the motor unit 21 to the input shaft 32, and outputs the resultant rotation from the output shaft 38 to the wheel hub bearing unit 11. The outer ring 12 of the wheel hub bearing unit 11 rotates at the same rotational speed as the output shaft 38 and drives the road wheel W attached and fixed to the outer ring 12.

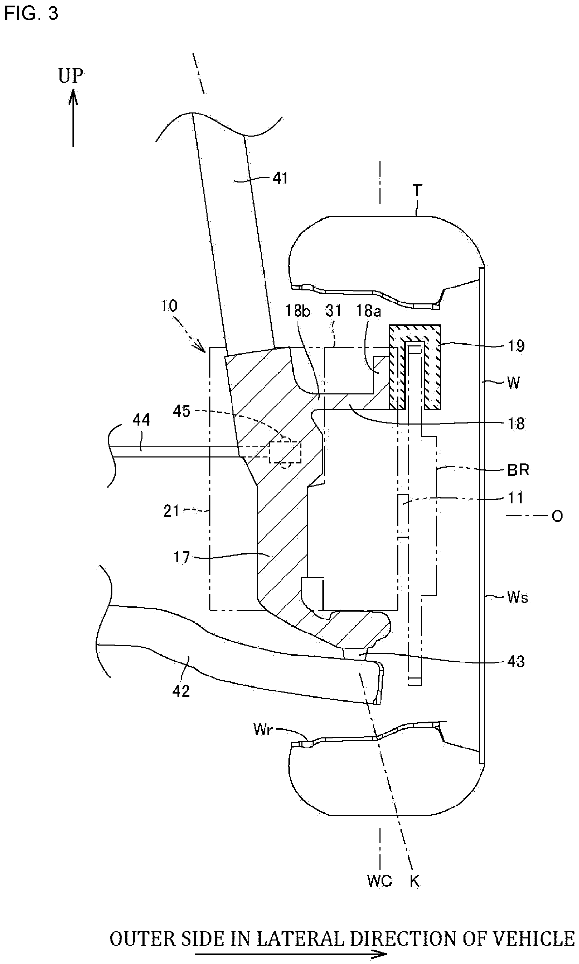

FIG. 3 is a schematic longitudinal section of a wheel, suspension system, and carrier member of an electric vehicle. In FIG. 3, the in-wheel motor drive device is shown in phantom for reference. The carrier member 17 extends in the vertical direction, the lower end of a damper 41 is coupled to the upper end of the carrier member 17, and the outer end of a lower arm 42 is coupled to the lower end of the carrier member 17. The upper end, not shown, of the damper 41 is coupled to a vehicle body-side member. The damper 41 can extend and contract in the vertical direction.

The inner end, not shown, of the lower arm 42 is coupled to a vehicle body-side member via a pivot. The lower arm 42 can swing in the vertical direction with its inner end as a base end and its outer end as a free end.

The carrier member 17 has in its upper end a fitting hole that is open upward. The lower end of the damper 41 is inserted and fixed in this fitting hole. A ball joint 43 is disposed between the lower end of the carrier member 17 and the outer end of the lower arm 42. The ball joint 43 allows the carrier member 17 to rotate relative to the lower arm 42 in all directions. The carrier member 17 can thus be steered about a steering axis K together with the in-wheel motor drive device 10 and the wheel. When the carrier member 17 bounces and rebounds in the vertical direction together with the in-wheel motor drive device 10 and the wheel, the lower arm 42 swings in the vertical direction. The steering axis K is a straight line passing through the ball joint 43 and the upper end, not shown, of the damper 41.

The damper 41 and the lower arm 42 form a strut suspension system. In a non-illustrated modification, the carrier member 17 may be coupled to other type of suspension system.

The middle region of the carrier member 17 other than the upper and lower ends of the carrier member 17 is disposed rearward of the motor unit 21 in the longitudinal direction of the vehicle so as to avoid the motor unit 21. Specifically, the middle region of the carrier member 17 is disposed offset in the longitudinal direction of the vehicle from the axis O (FIG. 2). The upper and lower ends of the carrier member 17 are disposed directly above and below the axis O.

As shown in FIG. 3, the outer end of a tie rod 44 is coupled to the middle region of the carrier member 17 via a ball joint 45. The tie rod 44 extends in the lateral direction of the electric vehicle, and the inner end of the tie rod 44 is coupled to a vehicle body-side member, not shown, specifically, a steering system.

A brake caliper bracket 18 is provided on the middle region of the carrier member 17. The brake caliper bracket 18 extends in the lateral direction of the electric vehicle. A brake caliper 19 is attached to an outer end 18a of the brake caliper bracket 18, and an inner end 18b of the brake caliper bracket 18 is integral with the carrier member 17.

As shown in FIG. 3, the entire brake caliper bracket 18 overlaps the in-wheel motor drive device 10 as viewed in the longitudinal direction of the vehicle. The upper end and middle region of the carrier member 17 also overlap the in-wheel motor drive device 10.

The road wheel W includes a cylindrical rim Wr and spokes Ws that are integral with an end on the one side in the axis O direction of the rim Wr. The rim Wr and the spokes Ws define an internal space region that is open to the other side in the axis O direction. The wheel hub bearing unit 11 of the in-wheel motor drive device 10, the brake rotor BR of a braking device, and the brake caliper 19 are accommodated in this internal space region. The damper 41 is disposed inward of a tire T and the road wheel W in the lateral direction of the vehicle. The steering axis K is tilted so that its upper side is located on the inner side in the lateral direction of the vehicle and its lower side is located on the outer side in the lateral direction of the vehicle.

Since the motor unit 21 of the in-wheel motor drive device 10 is disposed at a position closer to the front of the vehicle with respect to the axis O, the carrier member 17 can be disposed rearward of the in-wheel motor drive device 10 in the longitudinal direction of the vehicle. The motor unit 21 and the carrier member 17 can thus be arranged in a balanced manner regarding the weight.

Next, the braking device of the present embodiment will be described.

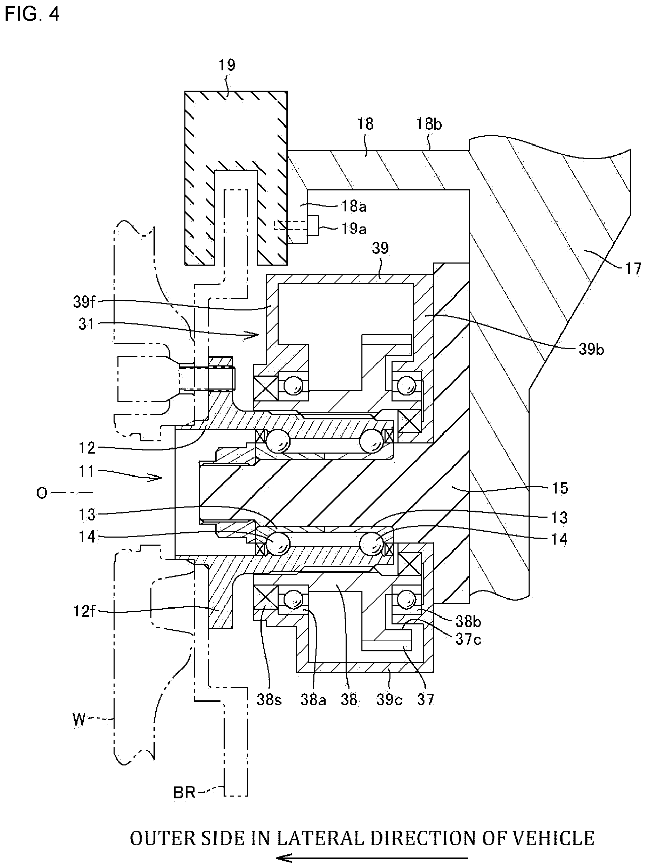

FIG. 4 is an enlarged schematic longitudinal section of the braking device. The braking device includes: the brake caliper 19 that is a braking mechanism; the brake caliper bracket 18 that is a braking mechanism support for supporting the brake caliper 19; and the brake rotor BR that is a member to be braked.

The brake caliper bracket 18 is integral with the carrier member 17. The outer end 18a of the brake caliper bracket 18 is attached and fixed to the brake caliper 19 by connecting means such as a bolt 19a. The brake caliper 19 is supported only by the brake caliper bracket 18 and is separated from the casing (body casing 39, motor casing 29, and motor casing cover 29v) of the in-wheel motor drive device 10.

The brake caliper 19 has an inverted U-shape in section and has in the internal space of the U-shape a pair of friction materials (not shown) and a piston (not shown) for pressing the friction materials. The pair of friction materials faces both sides of the disc-shaped brake rotor BR and brakes the brake rotor BR by sliding contact with both sides of the brake rotor BR. The brake caliper 19 is a floating brake caliper that can move in the thickness direction of the brake rotor BR, and the brake caliper 19 can press the outer periphery of the brake rotor BR. The brake caliper 19 can be a known brake caliper, and detailed description of its floating structure and internal structure will be omitted.

The brake rotor BR has a hat shape, and the central portion and outer periphery of the brake rotor BR form a step lowered in the axis O direction. The central portion and the outer periphery are connected by a cylindrical portion. The central portion of the brake rotor BR is located on the one side in the axis O direction, and the outer periphery of the brake rotor BR is located on the other side in the axis O direction. The central portion and cylindrical portion of the brake rotor BR define a circular recess that is open toward the other side in the axis O direction (inboard side). The flange 12f of the outer ring 12 is disposed in the circular recess. The road wheel W, the central portion of the brake rotor BR, and the flange 12f of the outer ring 12 are coaxially arranged in this order from the outboard side toward the inboard side and are connected to each other by bolts. The brake rotor BR thus rotates with the road wheel W and the outer ring 12. Regarding the position in the axis O direction, the outer periphery of the brake rotor BR is located closer to the carrier member 17 than the central portion of the brake rotor BR. Both surfaces of the outer periphery of the brake rotor BR are sliding surfaces that are pressed by the brake caliper 19.

A braking structure of the present embodiment includes the brake caliper bracket 18 having its one end connected to the carrier member 17 and the other end supporting the brake caliper 19. The braking force the brake caliper 19 receives when braking the brake rotor BR is therefore input to the brake caliper bracket 18 and the carrier member 17, but is not input to the casing of the in-wheel motor drive device 10. Accordingly, misalignment of the motor rotating shaft 22 inside the motor casing 29 will not occur, which contributes to preventing noise and vibration of the in-wheel motor drive device 10.

Since the brake caliper bracket 18 is integral with the carrier member 17, the brake caliper 19 can be directly fixed to the carrier member 17. The braking force is therefore not input to the body casing 39 and the motor casing 29 of the in-wheel motor drive device 10, and it is not necessary to increase the rigidity of these casings. According to the present embodiment, the weight of the in-wheel motor drive device 10 can be reduced by reducing the thickness of the casing of the in-wheel motor drive device 10, simplifying the shape of the casing of the in-wheel motor drive device 10, etc.

The outer ring 12 is a rotating ring, and the inner rings 13 are stationary rings. The inner fixing member 15 extending along the axis O is inserted and fixed in central holes of the inner rings 13, and the carrier member 17 is attached and fixed to the inner fixing member 15. Accordingly, as shown in FIG. 4, the inner rings 13 of the wheel hub bearing unit 11, the inner fixing member 15, and the carrier member 17 can bear the axle load of a vehicle body including the vehicle body-side members.

The brake caliper bracket 18 of the present embodiment is disposed at a position closer to the rear of the vehicle with respect to the axis O of the wheel hub bearing unit 11. Accordingly, the brake caliper 19 is disposed at a position closer to the rear of the vehicle with respect to the axis O and the motor unit 21 is disposed at a position closer to the front of the vehicle with respect to the axis O. A compact layout is thus achieved.

As shown in FIG. 3, the outer end 18a of the brake caliper bracket 18 is disposed in the internal space region of the wheel. The brake caliper bracket 18 can thus be disposed so as to cross the wheel center WC of the wheel. Or, in other modified embodiment of the present invention not shown in figure, the brake caliper 19 can be disposed so as to cross the wheel center WC of the wheel. The wheel center WC is a straight line or flat plane passing through the center in the axis O direction of the wheel, and is perpendicular to the axis O. The brake caliper 19 brakes the brake rotor BR at a position near the wheel center WC. This avoids the moment due to the braking force acting on the brake caliper bracket 18.

The brake caliper bracket 18 is disposed above the axis O and offset outward in the lateral direction of the vehicle as viewed from the steering axis K. The steering axis K of the present embodiment is tilted so that its upper side is located inward of its lower side in the lateral direction of the vehicle. The lower arm 42 is disposed below the steering axis K. According to the present embodiment, a part of the internal space region of the road wheel W located above the axis O and on the outboard side of the steering axis K can be used as a space for placing the braking device. According to the present embodiment, the layout of the braking device is optimized in the narrow internal space region of the road wheel W.

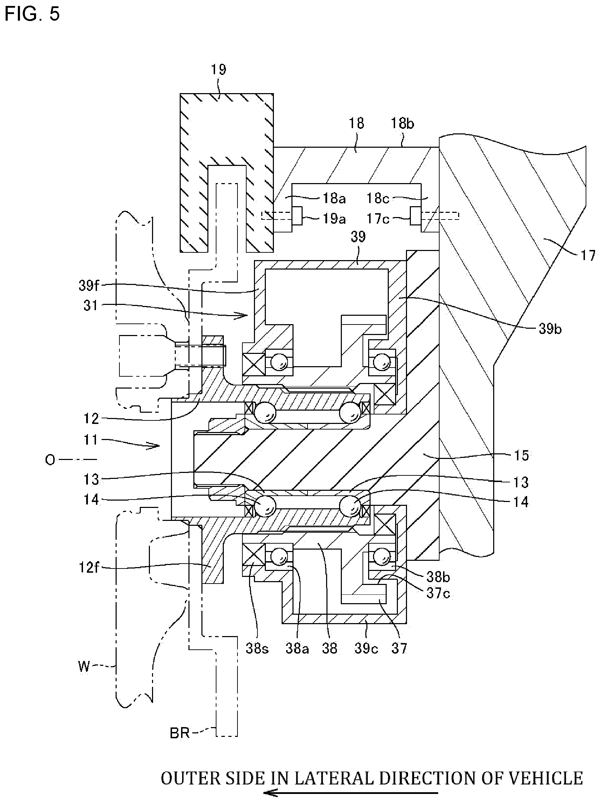

Next, a modification of the present invention will be described. FIG. 5 is a longitudinal section of a modification of the present invention. For the modification, the same configurations as those of the first embodiment are denoted with the same reference characters as those of the first embodiment, and description thereof will be omitted. Configurations different from those of the first embodiment will be described below. In the modification, the brake caliper bracket 18 is a separate member from the carrier member 17 and is connected to the carrier member 17. One end 18a of the brake caliper bracket 18 is attached and fixed to the brake caliper 19 by connecting means such as the bolt 19a, and the other end 18c of the brake caliper bracket 18 is attached and fixed to the carrier member 17 by connecting means such as a bolt 17c.

Since the brake caliper bracket 18 of the modification is a separate member from the carrier member 17, the brake caliper bracket 18 is replaceable, and a variety of brake calipers 19 and brake rotors BR can be disposed around the wheel.

Although the embodiment of the present invention is described above with reference to the drawings, the present invention is not limited to the illustrated embodiment. Various alterations and modifications can be made to the illustrated embodiment without departing from the spirit and scope of the invention.

### Industrial Applicability

The present invention is advantageously used for electric vehicles and hybrid vehicles.

### Reference Signs List

- 10: In-Wheel Motor Drive Device
- 11: Wheel Hub Bearing Unit
- 12: Outer Ring (Rotating Ring)
- 13: Inner Ring (Stationary Ring)
- 12f: Flange
- 15: Inner Fixing Member
- 17: Carrier Member
- 18: Brake Caliper Bracket (Braking Mechanism Support)
- 19: Brake Caliper (Braking Mechanism)
- 21: Motor Unit
- 31: Reduction Gear Unit
- 39: Body Casing
- 41: Damper
- 42: Lower Arm
- 44: Tie Rod
- BR: Brake Rotor (Member to Be Braked)
- W: Road Wheel (Wheel)

## Claims

1. A braking structure for an in-wheel motor drive device, comprising:
an in-wheel motor drive device including a wheel hub bearing unit and a motor unit, the wheel hub bearing unit including a rotating ring connected to a wheel and a member to be braked, a stationary ring disposed coaxially with the rotating ring, and a plurality of rolling elements arranged in annular clearance between the rotating ring and the stationary ring, and the motor unit being configured to drive the rotating ring;
a carrier member coupled to a vehicle body-side member and attached to and fixed to the stationary ring; and
a braking mechanism support provided on the carrier member and supporting a braking mechanism configured to press and brake the member to be braked.

2. The braking structure for an in-wheel motor drive device according to claim 1, wherein
the rotating ring is an outer ring,
the stationary ring includes an inner ring and an inner fixing member extending in an axial direction from the inner ring, and
the carrier member is attached and fixed to the inner fixing member.

3. The braking structure for an in-wheel motor drive device according to claim 1 or 2, wherein
the braking mechanism support is a separate member from the carrier member and has its one end attached to the braking mechanism and the other end attached and fixed to the carrier member.

4. The braking structure for an in-wheel motor drive device according to any one of claims 1 to 3, wherein
the braking mechanism support is disposed at a position closer to a rear of a vehicle with respect to an axis of the wheel hub bearing unit.

5. The braking structure for an in-wheel motor drive device according to any one of 1 to 4, wherein
the braking mechanism support has one end to which the braking mechanism is attached and the other end that is connected to the carrier member, and the one end of the braking mechanism support is disposed in an internal space region of the wheel.
